# EUROPEAN PATENT APPLICATION

(11) **EP 4 700 237 A1**
(43) Date of publication of application: **25.02.2026**
(21) Application number: 25197462.2
(22) Date of filing: 21.08.2025
(51) Int. Cl.: F03G 7/06, F02C 7/12, F16K 31/00

(54) **THERMAL ACTUATOR FOR AIRCRAFT ENGINE**

(30) Priority: 21.08.2024 US 202418810965
(71) Applicant: PRATT & WHITNEY CANADA CORP., Longueuil, Québec J4G 1A1 (CA)
(72) Inventor: GARCEAU, Marc-Antoine, (01BE5) Longueuil, J4G 1A1 (CA)
(74) Representative: Dehns

(57) **Abstract**

A thermal actuator (70), has: a housing (71) having a peripheral wall (71A) extending from a first end (71B) to a second end (71C) and defining a fluid port (71D); a first bellows (72) within the housing (71) and deformable along a longitudinal direction (L1); a thermal expansion material (73) within the housing (71) between the first bellows (72) and the second end (71C) of the housing (71) and outwardly of the first bellows (72); a movable member (74) engaged by the first bellows (72) and received in the housing (71) and protruding through an opening (71E), the movable member (74) movable by the first bellows (72) relative to the housing (71) by expansion and by contraction of the thermal expansion material (73); a second bellows (75) disposed within the housing (71) and engaged by the movable member (74) and fluidly isolating the fluid port (71D) from the opening (71E) of the housing (71); and a fluid-receiving volume (V) defined within the housing (71) by the first bellows (72) and the second bellows (75) and in fluid communication with the fluid port (71D).

## Description

### TECHNICAL FIELD

The application relates generally to aircraft engines and, more particularly, to actuators used in such engines and more specifically in fluid systems of such engines.

### BACKGROUND

In aircraft engines, thermal actuators may be used to provide mechanical movement based on temperature conditions. For instance, such a thermal actuator may be provided upstream of a heat exchanger to control a valve configured to direct a flow either through the heat exchanger or through a bypass conduit that bypasses the heat exchanger. Although existing actuators are suitable for their intended purposes, there is room for improvement.

### SUMMARY

In one aspect, there is provided a thermal actuator, comprising: a housing having a peripheral wall extending from a first end to a second end and defining a fluid port; a first bellows disposed within the housing, the first bellows being deformable along a longitudinal direction that extends from the first end to the second end; a thermal expansion material located within the housing between the first bellows and the second end of the housing and outwardly of the first bellows; a movable member engaged by the first bellows, the movable member slidably received in the housing and protruding through an opening in the first end of the housing, the movable member movable by the first bellows relative to the housing by expansion and by contraction of the thermal expansion material; a second bellows disposed within the housing and engaged by the movable member, the second bellows fluidly isolating the fluid port from the opening of the housing; and a fluid-receiving volume defined within the housing by the first bellows and the second bellows, the fluid-receiving volume in fluid communication with the fluid port.

The thermal actuator described above may include any of the following features, in any combinations.

In some embodiments, the second bellows is located inwardly of the first bellows relative to the movable member and overlaps the first bellows along the longitudinal direction.

In some embodiments, the fluid-receiving volume is defined between the bellows and the second bellows.

In some embodiments, the first bellows and the second bellows are disposed on respective opposite sides of the fluid port along the longitudinal direction.

In some embodiments, the first bellows and the second bellows each have an open end secured to the housing at respective opposite sides of the fluid port along the longitudinal direction.

In some embodiments, the thermal expansion material is wax.

In another aspect, there is provided an aircraft engine, comprising: a fluid source; a heat exchanger core having an inlet, an outlet, at least one first conduit fluidly connecting the inlet to the outlet, and at least one second conduit in heat exchange relationship with the at least one first conduit, the at least one first conduit in fluid flow communication with the fluid source; a bypass conduit fluidly connecting the inlet to the outlet while bypassing the at least one first conduit; a valve in fluid communication with the bypass conduit, the valve configured to selectively allow or block fluid communication from the inlet to the outlet via the bypass conduit; and a thermal actuator operatively connected to the valve, the thermal actuator having: a housing having a peripheral wall extending from a first end to a second end; a first bellows received within the housing, the first bellows having bellows convolutions longitudinally distributed between the first end and the second end; a thermal expansion material located within the housing between the peripheral wall and the first bellows; a fluid port defined through the peripheral wall of the housing, the fluid port in fluid communication with the fluid source; a movable member engaged by the first bellows, the movable member slidably received within the housing and protruding through an opening defined at the first end of the housing, the movable member movable relative to the housing in response to an expansion and a contraction of the thermal expansion material; and means for blocking fluid communication between the fluid port and the opening of the housing.

The aircraft engine described above may include any of the following features, in any combinations.

In some embodiments, the means for blocking the fluid communication between the fluid port and the opening is a second bellows engaged to the movable member and fluidly separating the fluid port from the opening.

In some embodiments, the second bellows is located inwardly and longitudinally overlaps the bellows.

In some embodiments, a fluid-receiving volume is defined between the first bellows and the second bellows, the fluid-receiving volume being in fluid communication with the fluid port.

In some embodiments, the first bellows and the second bellows faces each other from opposite sides of the fluid port.

In some embodiments, a fluid-receiving volume is defined jointly by the bellows and the second bellows, the fluid-receiving volume being in fluid communication with the fluid port.

In some embodiments, the thermal expansion material is wax.

In yet another aspect, there is provided a method of actuating a component with a thermal actuator having a thermal expansion material located between a first bellows and a housing, the first bellows engaged to the component via a movable member slidably received within the housing through an opening thereof, the method comprising: receiving a fluid into the housing via a fluid port thereof while preventing the fluid from leaking out of the thermal actuator via the opening; heating the thermal expansion material by receiving the fluid inwardly of the thermal expansion material such that an inner portion of the thermal expansion material is heated before an outer portion thereof; and contracting the first bellows upon the thermal expansion material expanding to actuate the component.

The method described above may include any of the following features, in any combinations.

In some embodiments, the preventing of the fluid from leaking out of the thermal actuator via the opening includes sealing a gap between the movable member and a periphery of the opening.

In some embodiments, the sealing of the gap includes sealing the gap with a second bellows engaged to the movable member and secured to the housing.

In some embodiments, the receiving of the fluid includes receiving the fluid into a fluid-receiving volume of the housing, the fluid-receiving volume defined jointly by the first bellows and the second bellows.

In some embodiments, the receiving of the fluid into the fluid-receiving volume includes receiving the fluid between the first bellows and the second bellows.

In some embodiments, the receiving of the fluid into the fluid-receiving volume includes receiving the fluid into the fluid-receiving volume defined by the first bellows and the second bellows disposed on respective opposite sides of the fluid port.

In some embodiments, the heating the thermal expansion material includes heating wax.

### BRIEF DESCRIPTION OF THE DRAWINGS

Reference is now made to the accompanying figures in which:
Fig. 1 is a schematic cross sectional view of an aircraft engine depicted as a gas turbine engine;
Fig. 2 is a schematic view of a heat exchanger for the aircraft engine of Fig. 1;
Fig. 3 is a cross-sectional view of a thermal actuator for a valve of the heat exchanger of Fig. 2;
Fig. 4 is a cross-sectional view of another thermal actuator for the valve of the heat exchanger of Fig. 2; and
Fig. 5 is a flowchart illustrating steps of a method of actuating a component with a thermal actuator.

### DETAILED DESCRIPTION

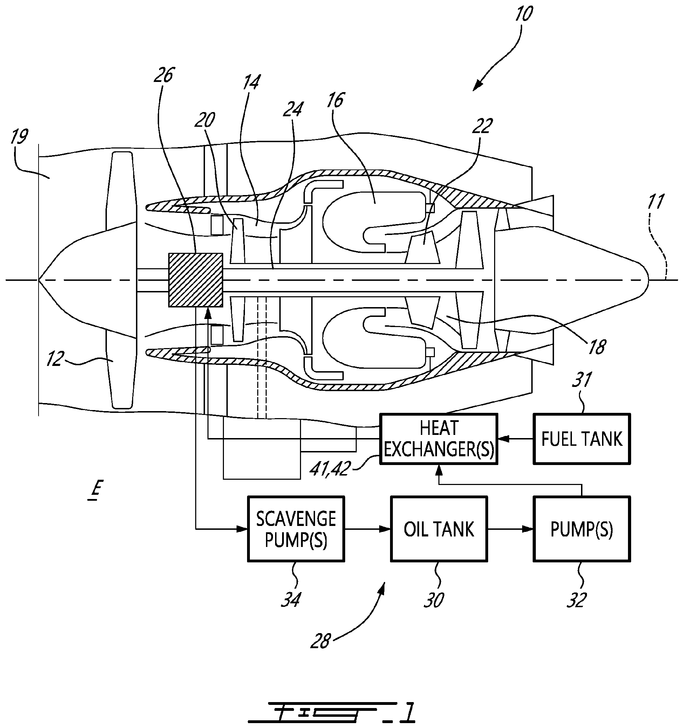

Fig. 1 illustrates an aircraft engine depicted as a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. More specifically, the gas turbine engine 10 has a core gas path including an intake 19 for receiving air. The compressor section 14 has at least one compressor 20 extending across the core gas path and the turbine section 18 has at least one turbine 22 extending across the core gas path, with the at least one compressor 20 and the at least one turbine 22 being rotatable with a rotary shaft 24 supported within the gas turbine engine 10 by bearings 26 (only one being shown for illustration purposes). An oil system 28 is provided for circulating oil to the bearings 26 and back to an oil reservoir 30. It will be appreciated that the principles of the disclosure apply to any aircraft engines, such as internal combustion engines (e.g., piston engine, rotary engine), any type of gas turbine engines, (e.g., turbofan, turboshaft, and turboprop), and auxiliary power unit.

The oil system 28 includes a fuel-oil heat exchanger (FOHE) 41 and an air-cooled oil cooler (ACOC) 42. The FOHE 41 is used to exchange heat between the oil and fuel to be supplied to the combustor 16 and the ACOC 42 is used to transfer heat from the oil to ambient air of an environment outside the gas turbine engine 10. In use, oil is drawn from the oil reservoir 30 via a pump 32, flows through the FOHE 41 and ACOC 42, is injected into one or more bearing housing for lubricating the bearings 26, and is scavenged back to the oil reservoir 30 via a scavenge pump 34.

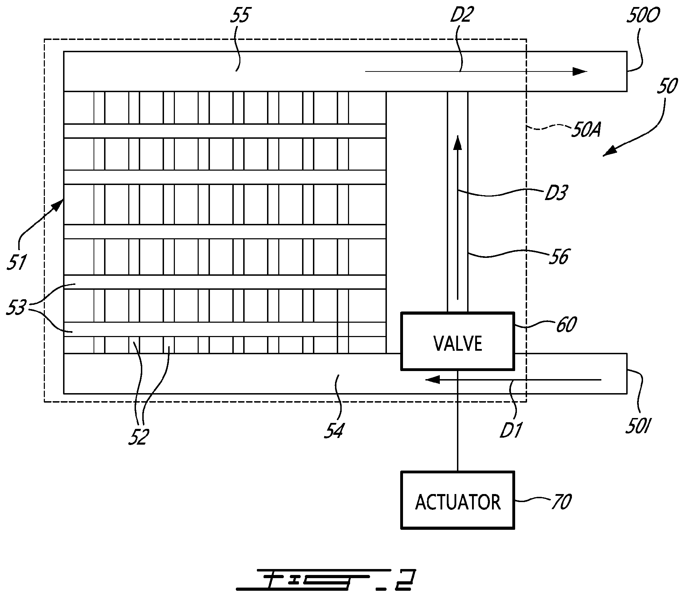

Referring now to Fig. 2, a heat exchanger is shown at 50. The heat exchanger 50 may correspond to any of the FOHE 41, the ACOC 42, or any other heat exchanger of the aircraft engine of Fig. 1. The heat exchanger 50 may be contained within a housing 50A. The heat exchanger 50 includes a heat exchanger core 51, having at least one first conduit 52 and at least one second conduit 53 in heat exchange relationship with the at least one first conduit 52. The at least one first conduit and at least one second conduit include a plurality of first conduits and a plurality of second conduits in this embodiment. The at least one first conduit 52 may flow the oil whereas the at least one second conduit may flow the fuel. The at least one first conduit 52 of the heat exchanger core 51 receives the fluid (e.g., fuel, oil) to be cooled via an inlet conduit 54 along direction D1 and the fluid exiting the at least one first conduit 52 is flown back towards other components via an outlet conduit 55 along direction D2. The inlet conduit 54 is fluidly connected to an inlet 50I of the heat exchanger 50 and the outlet conduit 55 is fluidly connected to an outlet 50O of the heat exchanger 50.

The heat exchanger 50 includes a bypass conduit 56 allowing the fluid to flow directly from the inlet conduit 54 to the outlet conduit 55 while bypassing the heat exchanger core 51 along direction D3. In other words, the bypass conduit fluidly connects the inlet 50I to the outlet 50O while bypassing the at least one first conduit 52 of the heat exchanger core 51. This may be useful in operating conditions where a temperature of the fluid is below a certain threshold. A valve 60 is used to selectively open or close the bypass conduit 56 to allow or restrict the fluid from flowing conduit 56. In other words, the valve 60 has an open configuration in which the inlet 50I is fluidly connected to the outlet 50O via the bypass conduit 56 and through the valve 60, and a closed configuration in which the fluid flow from the inlet 50I to the outlet 50O via the bypass conduit 56 is blocked by the valve 60. It will be appreciated that when the valve 60 is in the open configuration, the inlet 50I may remain fluidly connected to the outlet 50O via the at least one first conduit 52 of the heat exchanger core 51. However, because a flow resistance through the heat exchanger core 51 is expected to be more than a flow resistance through the bypass conduit 56, the fluid may tend to naturally flow through the bypass conduit 56 while bypassing the heat exchanger core 51 even if, in some cases, no valve prevents the fluid from reaching the at least one first conduit 52 of the heat exchanger core 51.

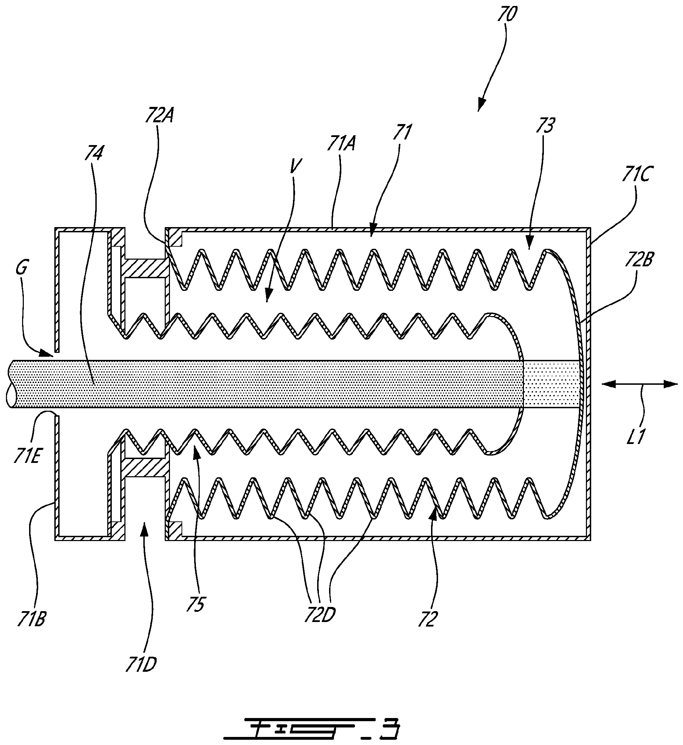

Referring to Fig. 3, an actuator 70, also referred to as a thermal actuator, for the valve 60 is shown. The actuator 70 is engaged to a valve member of the valve 60 and configured for moving the valve member between the open and closed configurations.

The actuator 70 includes a housing 71 having a peripheral wall 71A extending from a first end 71B to a second end 71C and defining a fluid port 71D. The fluid port 71D may be defined through the first end or the second end. The fluid port 71D may be a plurality of openings distributed circumferentially around a longitudinal axis of the housing 71. The fluid port 71D may include an inlet and an outlet separated from one another, or may be a single port acting jointly as inlet and outlet to allow a fluid to enter and exit the housing 71 as will be discussed below. The actuator 70 includes a first bellows 72 secured to the housing 71. In this configuration, the first bellows 72 extend from an open end 72A proximate or at the fluid port 71D to a closed end 72B proximate the second end 71C of the housing 71. The first bellows 72 define a cavity extending from the open end 72A to the closed end 72B. The closed end 72B of the first bellows 72 may be defined by an end wall connected to a peripheral wall of the first bellows 72. The open end 72A of the bellows 72 is secured to the housing 71. The first bellows 72 is contained within the housing 71 between the fluid port 71D and the second end 71C of the housing 71. The first bellows 72 is deformable (i.e., expandable and collapsible) along a longitudinal direction L1 parallel to the longitudinal axis of the housing 71; the peripheral wall 71A extending around the longitudinal axis. The first bellows 72 include convolutions 72D serially disposed one after the other along the longitudinal axis of the housing 71. These convolutions 72D permit the expansion and contraction of the bellows 72 as will be described below. The convolutions 72D are located between the open end and the closed end of the first bellows 72.

The actuator 70 further includes a thermal expansion material 73 located within the housing 71 and outwardly of the first bellows 72. Put differently, the thermal expansion material 73 is located between the peripheral wall 71A of the housing 71 and the first bellows 72. The thermal expansion material 73 is located radially between the peripheral wall 71A of the housing 71 and an outer surface of the first bellows 72 relative to the longitudinal axis. Some of the thermal expansion material 73 is located between the second end 71C of the housing 71 and the closed end 72B of the bellows 72. The thermal expansion material 73 may be wax or any other suitable material.

Still referring to Fig. 3, the actuator 70 includes a movable member 74, which may include a shaft, engaged by the first bellows 72. The movable member 74 may be secured to the closed end 72B of the first bellows 72 such that movements of the first bellows 72 are transmitted to the movable member 74. The movable member 74 is thus slidably received within the housing 71 and has a portion thereof which protrudes through an opening 71E defined at the first end 71B of the housing 71. The movable member 74 is movable relative to the housing 71 in response to expansion and contraction of the thermal expansion material 73.

In the embodiment shown, a second bellows 75 is secured to the housing 71 and engaged by the movable member 74. The second bellows 75 is blocking fluid communication between the fluid port 71D and the opening 71E of the housing 71. The second bellows 75 extends from an open end to a closed end. The open end of the second bellows 75 is secured to the housing 71 proximate or at the fluid port 71D, but to an opposite side of an attachment between the first bellows 72 and the housing 71. Put differently, the first and second bellows are both secured to the housing 71 at their respective open ends, but on respective opposite axial sides of the fluid port 71D along the longitudinal axis of the housing 71.

The actuator 70 defines a fluid-receiving volume V defined jointly by the first bellows 72 and the second bellows 75. The fluid-receiving volume V is in fluid communication with the fluid port 71D and fluidly isolated from the opening 71E by the second bellows 75. At least a portion of the fluid-receiving volume V is located inwardly of the first bellows 72 and of the thermal expansion material 73. In this embodiment, the fluid-receiving volume V is located between the first bellows 71 and the second bellows 75. Stated differently, the second bellows 75 is located inwardly and overlaps the first bellows 72.

In use, a fluid, such as fuel or oil, enters the fluid-receiving volume V via the fluid port 71D of the housing 71 and flows along the first bellows 72 and fills spaces defined between the convolutions 72D on an inner side of the first bellows 72. The fluid may then transfer thermal energy (e.g., heat) to the thermal expansion material 73. The heat transfer from the fluid inside the first bellows 72 to the thermal expansion material 73 on the outside of the first bellows 72 may be used to cause the expansion of the thermal expansion material 73, such as via a change from solid to liquid phase in the case of wax. The expansion of the thermal expansion material 73 causes a force applied to the closed end 72B of the first bellows 72, thereby pushing to contract the first bellows 72 to push the movable member 74 along the direction L1 to increase a length of the movable member 74 protruding from the opening 71E of the housing 71. In so doing, the second bellows 75 is also contracted since it is engaged to the movable member 74. The fluid may leave the fluid-receiving volume V via the same fluid port 71D. The thermal actuator 70 may then be used to close the valve 60 (Fig. 1) when the temperature of the fluid is above a temperature threshold to force the fluid to flow through the heat exchanger core 51 (Fig. 2).

It will be appreciated that the second bellows 75 may be replaced by any means configured for blocking fluid communication between the fluid port 71D and the opening 71E of the housing 71. These means may be, for instance, a diaphragm within the housing 71 and extending across the opening 71E, a seal between a periphery of the opening 71E and the movable member 74, and so on. The diaphragm may be secured to the movable member 74.

Such a configuration permits the fluid received in the fluid-receiving volume V to warm up a radially inner portion of the thermal expansion material 73 before a radially outer portion of the thermal expansion material 73. This may ensure that there is minimum or no parts of the thermal expansion material 73 that remain in a solid phase between the convolutions 72D as the first bellows 72 is being contracted by the thermal expansion material 73 in expansion. Thus, stress concentrations created by portions of the thermal expansion material 73 remaining in solid phase and being compressed between the convolutions 72D may be at least partially alleviated.

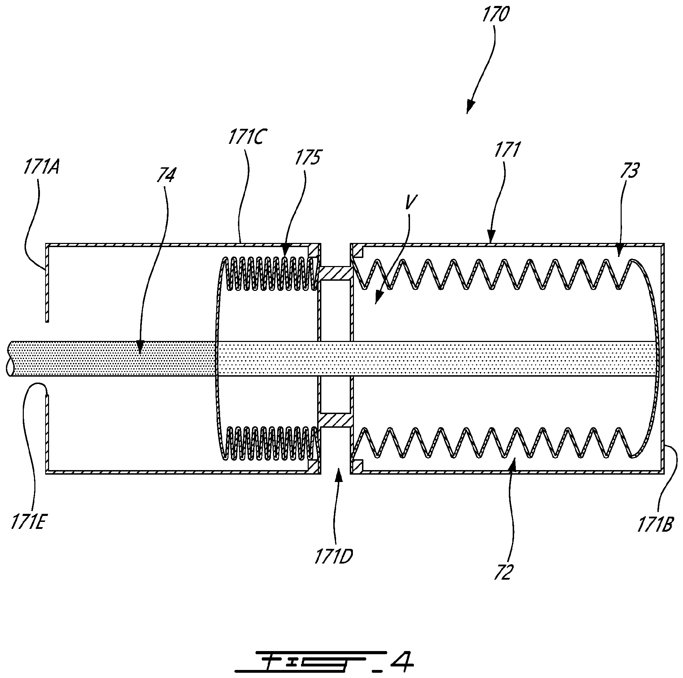

Referring now to Fig. 4, another embodiment of a thermal actuator is shown at 170. For the sake of conciseness, only features differing from the thermal actuator 70 of Fig. 3 are described below.

The actuator 170 includes a housing 171 extending from a first end 171A to a second end 171B and having a peripheral wall 171C defining a fluid port 171D and an opening 171E for receiving the movable member 74. In this embodiment, the second bellows 175 and the first bellows 72 are disposed in series on respective axially opposite sides of the fluid port 171D. Therefore, the first bellows 72 and the second bellows 175 are jointly defining the fluid receiving volume V that overlaps two sections of the housing 171 disposed on axially opposite sides of the fluid port 171D relative to the longitudinal axis of the housing 171. The second bellows 175 prevents the fluid from leaking out of the housing 171 via the opening 171E. As for the configuration of Fig. 3, the second bellows 175 follows movements of the movable member 74 to prevent leakage of the fluid via the opening 171E.

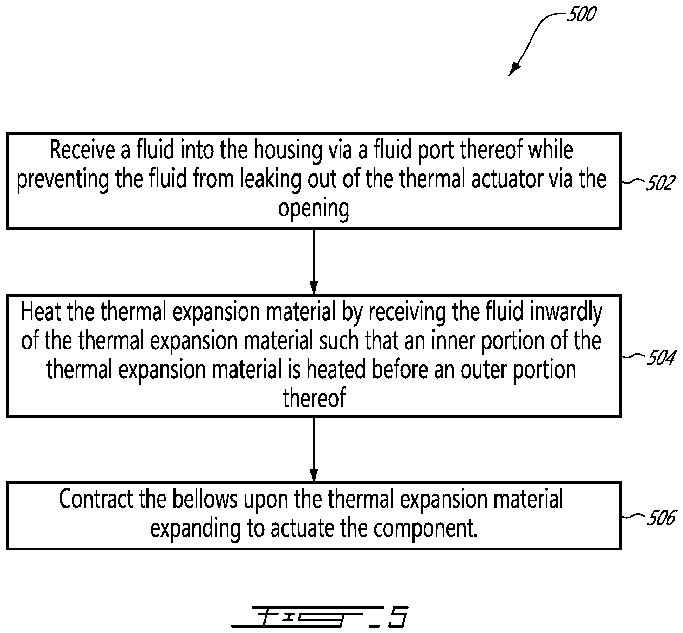

Referring to Fig. 5, a method of actuating a component with the thermal actuator 70, 170 is shown at 500. The method 500 includes receiving a fluid into the housing 71, 171 via the fluid port 71D, 171D thereof while preventing the fluid from leaking out of the thermal actuator 70, 170 via the opening 71E, 171E at 502; heating the thermal expansion material 73 by receiving the fluid inwardly of the thermal expansion material 73 such that an inner portion of the thermal expansion material 73 is heated before or at the same time as an outer portion thereof at 504; and contracting the bellows 72 upon the thermal expansion material expanding to actuate the component at 506.

In some embodiments, the preventing of the fluid from leaking out of the thermal actuator at 502 includes sealing a gap G between the movable member 74 and a periphery of the opening 71E, 171E. The sealing of the gap G may include sealing the gap G with the second bellows 75, 175 engaged to the movable member 74 and secured to the housing 71, 171.

In some embodiments, the receiving of the fluid includes receiving the fluid into the fluid-receiving volume V defined jointly by the bellows 72 and the second bellows 75, 175. This volume may be defined between the two bellows or may extend on both of opposite sides of the fluid port 71D, 171D.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A thermal actuator (70), comprising:
a housing (71; 171) having a peripheral wall (71A; 171C) extending from a first end (71B; 171A) to a second end (71C; 171B) and defining a fluid port (71D; 171D);
a first bellows (72) disposed within the housing (71; 171), the first bellows (72) being deformable along a longitudinal direction (L1) that extends from the first end (71B; 171A) to the second end (71C; 171B);
a thermal expansion material (73) located within the housing (71; 171) between the first bellows (72) and the second end (71C; 171B) of the housing (71; 171) and outwardly of the first bellows (72);
a movable member (74) engaged by the first bellows (72), the movable member (74) slidably received in the housing (71; 171) and protruding through an opening (71E; 171E) in the first end (71B; 171A) of the housing (71; 171), the movable member (74) movable by the first bellows (72) relative to the housing (71; 171) by expansion and by contraction of the thermal expansion material (73);
a second bellows (75; 175) disposed within the housing (71; 171) and engaged by the movable member (74), the second bellows (75; 175) fluidly isolating the fluid port (71D; 171D) from the opening (71E; 171E) of the housing (71; 171); and
a fluid-receiving volume (V) defined within the housing (71; 171) by the first bellows (72) and the second bellows (75; 175), the fluid-receiving volume (V) in fluid communication with the fluid port (71D; 171D).

2. The thermal actuator (70) of claim 1, wherein the second bellows (75) is located inwardly of the first bellows (72) relative to the movable member (74) and overlaps the first bellows (72) along the longitudinal direction (L1).

3. The thermal actuator (70) of claim 2, wherein the fluid-receiving volume (V) is defined between the first bellows (72) and the second bellows (75).

4. The thermal actuator (70) of any of the preceding claims, wherein the first bellows (72) and the second bellows (75; 175) are disposed on respective opposite sides of the fluid port (71D; 171D) along the longitudinal direction (L1).

5. The thermal actuator (70) of any of the preceding claims, wherein the first bellows (72) and the second bellows (75; 175) each have an open end (72A) secured to the housing (71; 171) at respective opposite sides of the fluid port (71D; 171D) along the longitudinal direction (L1).

6. The thermal actuator (70) of any of the preceding claims, wherein the thermal expansion material (73) is wax.

7. An aircraft engine, comprising:
a fluid source;
a heat exchanger core (51) having an inlet (50I), an outlet (50O), at least one first conduit (52) fluidly connecting the inlet (50I) to the outlet (50O), and at least one second conduit (53) in heat exchange relationship with the at least one first conduit (52), the at least one first conduit (52) in fluid flow communication with the fluid source;
a bypass conduit (56) fluidly connecting the inlet (50I) to the outlet (50O) while bypassing the at least one first conduit (52);
a valve (60) in fluid communication with the bypass conduit (56), the valve (60) configured to selectively allow or block fluid communication from the inlet (50I) to the outlet (50O) via the bypass conduit (56); and
a thermal actuator (70) according to any of the preceding claims, the thermal actuator (70) operatively connected to the valve (60).

8. A method of actuating a component with a thermal actuator (70) having a thermal expansion material (73) located between a first bellows (72) and a housing (71; 171), the first bellows (72) engaged to the component via a movable member (74) slidably received within the housing (71; 171) through an opening (71E; 171E) thereof, the method comprising:
receiving a fluid into the housing (71; 171) via a fluid port (71D; 171D) thereof while preventing the fluid from leaking out of the thermal actuator (70) via the opening (71E; 171E);
heating the thermal expansion material (73) by receiving the fluid inwardly of the thermal expansion material (73) such that an inner portion of the thermal expansion material (73) is heated before an outer portion thereof; and
contracting the first bellows (72) upon the thermal expansion material (73) expanding to actuate the component.

9. The method of claim 8, wherein the preventing of the fluid from leaking out of the thermal actuator (70) via the opening (71E; 171E) includes sealing a gap (G) between the movable member (74) and a periphery of the opening (71E; 171E).

10. The method of claim 9, wherein the sealing of the gap (G) includes sealing the gap (G) with a second bellows (75; 175) engaged to the movable member (74) and secured to the housing (71; 171).

11. The method of claim 10, wherein the receiving of the fluid includes receiving the fluid into a fluid-receiving volume (V) of the housing (71; 171), the fluid-receiving volume (V) defined jointly by the first bellows (72) and the second bellows (75; 175).

12. The method of claim 11, wherein the receiving of the fluid into the fluid-receiving volume (V) includes receiving the fluid between the first bellows (72) and the second bellows (75; 175).

13. The method of claim 11, wherein the receiving of the fluid into the fluid-receiving volume (V) includes receiving the fluid into the fluid-receiving volume (V) defined by the first bellows (72) and the second bellows (75; 175) disposed on respective opposite sides of the fluid port (71D; 171D).

14. The method of any of claims 8 to 13, wherein the heating the thermal expansion material (73) includes heating wax.
